# EUROPEAN PATENT APPLICATION

(11) **EP 3 570 042 A1**
(43) Date of publication of application: **20.11.2019**
(21) Application number: 19173439.1
(22) Date of filing: 09.05.2019
(51) Int. Cl.: G01N 35/04, B65G 54/02, G01N 35/00

(54) **TUBE CARRIER**

(30) Priority: 09.05.2018 LU 100790
(71) Applicant: Stratec SE, 75217 Birkenfeld (DE)
(72) Inventor: Gröhbühl, Bernd, 76275 Ettlingen (DE); Stiess, Erich, 76228 Karlsuhe (DE)
(74) Representative: Tegethoff, Sebastian

(57) **Abstract**

The field of the present invention relates to sample tube carrier for automated analyzer systems for processing patient samples. The invention provides a sample carrier for automated analyzer systems, comprising a body with two wheels at opposite sides of the body for moving the sample carrier, a ferromagnetic core arranged with the body, wherein the sample carrier has no drive

## Description

### Field of the invention

The field of the present invention relates to sample tube carrier for automated analyzer systems for processing patient samples.

### Brief description of the related art

Rack based loading systems for samples are used in automated analyzers like instruments of STRATEC® Biomedical AG. The samples are stored in tubes which are vertically inserted into a rack in a way that an ID codes of the tubes can be read-out. The racks vary regarding the number of sample tubes they can carry, in their geometry and size, the type of tube fixation within the rack as well as in rack ID labeling and empty position detection.

The user manually inserts sample racks into a sample loading bay of an automated analyzer, wherein the sample rack further comprises so-called guiding features like sample IDs that can be scanned during insertion of the rack. Once inserted and identified, the samples usually remain immobile at their position in the sample rack until they are processed and taken out by a user. The pipettor moves to reach specific samples.

An alternative approach to samples that are placed in a sample rack and a moving pipette represents a system that transport sample tubes to a processing place. Such a transport can be achieved by sample tubes that are placed in a rotating disc providing specific places for taking up samples.

European Patent Application EP 2 977 765 A1 discloses a sample container carrier for a laboratory sample distribution system having a cover above a magnet in order to suitably align and move the sample container carrier in the magnetic field. The document further relates to a laboratory sample distribution system having such a sample container carrier and to a laboratory automation system containing such a laboratory sample distribution system.

International application WO 2013099647 A1 discloses a test tube holder, which can substantially perpendicularly hold various kinds of test tubes and has a structure durable with respect to loading/unloading of the test tubes, is applicable to various test tube shapes, and has excellent assemblability. A test tube holder according to this document is provided with: a housing section having a hollow portion therein; a holding section, which is positioned on the upper side of the housing section, and which has an opening for receiving test tubes, and a housing section for housing the received test tubes; and an elastic section, which is formed on the inner side of the holding section such that the elastic section is in contact with the housed test tubes. The test tube holder is characterized in having a weight that is housed in the hollow portion. The holding section and the elastic section may be integrally formed, preferably the sections are integrally formed of resin. In the hollow portion of the housing section, an individual identification tag, an electromagnetic wave absorber, and a supporting member for a tapered test tube can be housed in addition to the weight, depending on the intended use.

Document WO 2012158520 A1 concerns a laboratory product transport element for a laboratory transport system with an energy receiver and/or energy accumulator to provide drive power, at least one signal receiver to receive control signals, a control unit to generate drive signals as a function of at least one control signal obtained from the at least one signal receiver, movement devices for independent movement of the laboratory product transport element on a transfer path as a function of the drive signals of the control unit, in which the drive devices are driven by the drive power and at least one holder to hold a laboratory product being transported. The invention also concerns a laboratory transport system with at least one laboratory product transport element according to an embodiment of the invention and a transfer path arrangement. The invention also concerns methods for operation of laboratory transport systems according to an embodiment of the invention.

WO2011138448 relates to a system for transporting containers between different stations, wherein the containers are accommodated in container carriers. The system comprises a control unit, which controls the transportation of the container carriers, a transporting surface, which is subdivided into sub-surfaces and on which the container carriers can be arranged in a movable manner, and drive means, wherein the drive means are activated by the control unit and one drive means in each case is assigned to one sub-surface in each case, wherein a drive means in each case is designed in order to provide an associated container carrier with driving power.

Published European patent application EP 2 995 959 A1 relates to a laboratory sample distribution system having a recovery device, and to a laboratory automation system having such a laboratory sample distribution system. The recovery device is adapted to manipulate items such as sample container carriers or sample containers on a transport plane of the laboratory sample distribution system in the case of an error condition.

In published German patent application DE 10 2011 090 044 A1 is a transport system for an analyzer device disclosed. Carrier are moved by controlling magnets corresponding to a two-dimensional linear motor so that the carrier is moved by a switch between magnetic attraction and repulsion.

Published US application US 2014/0202829 A1 relates to a laboratory product transport element for a laboratory transport system with an energy receiver and/or energy accumulator to provide drive power, at least one signal receiver to receive control signals, a control unit to generate drive signals as a function of at least one control signal obtained from the at least one signal receiver, movement devices for independent movement of the laboratory product transport element on a transfer path as a function of the drive signals of the control unit, in which the drive devices are driven by the drive power and at least one holder to hold a laboratory product being transported. The invention also concerns a laboratory transport system with at least one laboratory product transport element according to an embodiment of the invention and a transfer path arrangement. The invention also concerns methods for operation of laboratory transport systems according to an embodiment of the invention.

Published US application US 2015/0233956 A1 discloses a transport device for transporting a sample container along a transport surface is presented. The transport device comprises a permanent magnet, a holding unit and a receiving unit. This enables reliable transporting of sample containers by means of magnetic forces. A sample distribution system and a laboratory automation system are also disclosed.

An unsatisfying STAT (Short Turn Around Time) sample management is a side effect of such a rack-based handling, as at least one complete rack loading lane needs to be kept free all the time in case a single STAT sample must be loaded.

Another disadvantage is that a sample loading module occupies a lot of valuable space at the instrument front, whereas space in the rear of the instrument remains unused as it cannot be accessed by the user for loading and unloading samples.

The complete Sample Loading Unit needs to be accessible by the pipettor, which typically leads disadvantageously to larger pipettor travel ways, higher cost and spatial constraints.

The usual Sample Loading Unit is typically an area used by both, pipettor and user, which drives the needs for thorough risk assessment and appropriate risk mitigations to avoid hazardous interaction or unintended instrument damages.

Calibrators and control samples need a free sample rack so that an unoccupied rack lane has be introduced.

User handling of the sample racks has some ergonomic deficiencies like cumbersome loading or introducing of a long rack onto the guiding rails of the module or lack of stability of a rack when standing on a lab desk.

Sample vessels need to be manually oriented in the racks with their ID codes facing towards specific rack openings for safe and reliable reading.

Cleaning of the module base is complicated due to installed rack guiding features.

### Object of the invention

The present invention shall provide a passive transport carrier for a single sample tube, a combination of passive transport carrier and a trays for arrangement as wells as a system comprising the passive transport carrier and a handling system.

### Summary of the invention

The instant invention provides a sample carrier for automated analyzer systems, comprising a body with two wheels at opposite sides of the body the carrier for moving the sample carrier, a U-shaped ferromagnetic core arranged in an upright position with its opening directed to the bottom of the sample carrier within the body of the carrier, wherein the sample carrier has no active drive.

The sample may comprise clamps on top of its body for fixation of sample tubes. In a further embodiment, five clamps for fixation are envisaged.

It is intended that the clamps may have a length for fixation of sample tubes with a diameter of 10 to 16 mm and a height of maximal 100 mm.

The sample carrier may further comprise ID tags at its bottom for storing information.

In a further embodiment, the sample carrier may have two wheels that are arranged centrally on a virtual axis through the sample carrier.

The diameter of the wheels shall be larger than at least half of the height of the sample carrier body.

The invention relates further to a system comprising a sample carrier as described above, and a handling system for moving the sample carrier that is arranged below a transporting surface.

The handling system may in a further aspect comprise a U-shaped magnet that is arranged in downright position with its opening directed to the upper surface of the transporting surface.

The U-shaped magnet of the handling system may be movable below the transporting surface.

The present invention relates further to a method for transporting a sample comprising the steps of: Placing a sample into a sample carrier comprising a body with two wheels at opposite sides of the body the carrier for moving the sample carrier, a U-shaped ferromagnetic core arranged in an upright position with its opening directed to the bottom of the sample carrier within the body of the carrier, wherein the sample carrier has no active drive; Placing the sample carrier onto a transporting surface; Coupling of the sample carrier with a handling system that is arranged below a transporting surface.

In a further aspect, the method may comprise the step of the handling system comprising a U-shaped magnet that is arranged in downright position with its opening directed to the upper surface of the transporting surface that is coupled with the U-shaped ferromagnetic core of the carrier.

It is also envisaged for the method that U-shaped ferromagnetic core of the handling system is moved below the transporting surface to move the coupled carrier rolling onto the transporting surface.

Still other aspects, features, and advantages of the present invention are readily apparent from the following detailed description, simply by illustrating a preferable embodiments and implementations. The present invention is also capable of other and different embodiments and its several details can be modified in various obvious respects, all without departing from the spirit and scope of the present invention. Accordingly, the drawings and descriptions are to be regarded as illustrative in nature, and not as restrictive. Additional objects and advantages of the invention will be set forth in part in the description which follows and in part will be obvious from the description, or may be learned by practice of the invention

### Summary of the figures

For a more complete understanding of the present invention and the advantages thereof, reference is now made to the following description and the accompanying drawings, it shows:
- FIG. 1: Passive transport carrier with sample tube
- FIG. 2: Top view onto passive transport carrier
- FIG. 3: Side view on passive transport carrier without sample tube
- FIG. 4: Bottom view on passive transport carrier
- FIG. 5: Sectional view into passive transport carrier
- FIG. 6: Magnetic simulations to visualize differences between coupled (left) and uncoupled state between passive transport carrier and handling system

### Detailed description of the invention

The invention relates to a passive transport carrier for a single sample tube. The technical problem is solved by the features of the independent claim. The dependent claims refer to further embodiments of the invention.

Within the meaning of the present invention, passive in terms of a carrier means, that the carrier has no active drive components to accomplish the transport by itself. The carrier is a generic device to allow for integration in various OEM analyzers and their loading and transport concepts. It has an internal ferromagnetic core, so it can be moved by magnetic force of an external permanent magnet as part of the transport installation.

The body of a carrier designates the whole structure of the device, whether it is a frame, rack, bridge or whatever is carried by wheels. A frame for example which has four ends being carried by wheels represents a body within the meaning of the present invention, so that all wheels will have to be taken into account that are located on the frame, respectively on its lower ends.

The terms carrier, sample carrier, transport carrier and passive transport carrier shall be understood as synonyms within the description of the present invention.

The carrier is equipped with two big wheels that support a low friction linear movement and allow for rotating the carrier around its vertical centre axis. The carrier further comprises RFID technology to carry and provide information about the carrier ID and type, the loaded tube and sample and additional information like e.g. priorities for handling, travel paths or destination. The carrier information and information about the patient sample may also be matched by the instrument software. This could be useful if the RFID Tag is not writable within the instrument.

The basic carrier allows for loading of sample tubes with a diameter of 10 - 16 mm. Different types of carriers like for paediatric tubes or for project specific solutions can be customized if needed in a specific analyzer. Sample tubes are inserted manually and can reliably identified without rotational alignment by the user. Basic tube heights up to 100 mm are supported, higher tubes can be inserted and fixed easily as the carrier does not limit tube heights.

The carrier is intended to roll over flat surfaces inside the analyser, without having a drive that is arranged within the carrier.

A number of clamping springs center and fix a tube in a carrier of the present invention, wherein the number of clamping springs can vary between 3 and 5. Depending on number and geometry, the width of each clamping spring shall be limited to leave enough space between two springs to allow for reading a sample ID barcode labeled according to AUTO2 A2 specification (the appropriate specification for labeling ID codes on sample containers in the IVD field).

Unlike with commonly used sample racks, the user does not need to rotationally align the sample tubes when inserting them. Orientation between code and reader is established by either rotating the carrier or inspect turned-away codes by a multi-mirror approach.

Uncommon customer specific or project specific sample container geometries can be addressed by individual adapters or clamping mechanisms. Upcoming 2D- ID codes can be supported by limiting the number of clamping springs, reducing their width or redesigning them in a way to open the field of view for a reader (e.g. camera) and the illumination.

As already mentioned, the carrier does not incorporate active drive components. Its movement is performed by applying a magnetic force between the carrier and the transport and handling system, which moves the passive sample carrier via this magnetic force coupling. The handling system and the passive transport carrier do not have direct contact. There is a planar traveling surface between them onto which the passive sample carrier does have three degrees of freedom to travel, two lateral ones (X /Y) on the planar surface and a rotational one around its center vertical axis.

To allow for a safe and reliable magnetic coupling between carrier and handling, the magnetic force must be adequately high. This force however contributes almost completely as normal force to the friction for the movement of the carrier on its travelling surface, which is the main reason, why the carrier uses two wheels for its movement and does not purely slide.

Both wheels are located on a virtual axis through the center of the passive transport carrier to ideally allow for a rotational movement. As bigger wheels easier pass little particles or other obstacles, the carrier shall contain the biggest possible wheels to fit in its cylindrical build body.

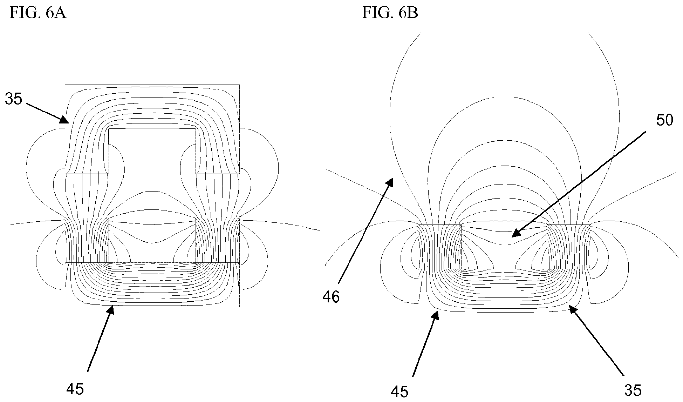

Each carrier contains a ferromagnetic core. It is not intended to implement permanent magnets in the passive sample carrier as their magnetic forces would attract, repel or in any other way influence other carrier in the analyzer as well as before, during and after loading and unloading. The U-shaped ferromagnetic core is a result of design and simulation iterations for best supporting lateral and rotational passive transport carrier moves. The arrangement and orientation of a U-shaped magnetic core as shown in FIG. 6A and FIG. 6B in the carrier and arrangement and orientation of a U-shaped magnet in the handling system has been proven to be advantageous, because of the improved magnetic flux that allows a sufficient and secure binding of the carrier while allowing a free movement of the carrier on the transporting surface.

The carrier could easily make uncontrolled and undesired moves and worst-case tip over and spill sample liquid out of the tubes they carry. This would be considered as a high-risk scenario as the spilled liquid may contaminate a user, the analyzer or the workplace.

As the carrier of the present invention can easily roll, it is mandatory to implement measures to set it still in certain positions as for example for identification, storage or pipetting. The different functions in these positions trigger different approaches to reduce some or all degrees of freedom of a carrier of the present invention. This is achieved by means of external forces like friction, clamping, recessed seating or magnetic fixation as the carrier itself does not incorporate a fixation mechanism.

The carrier itself comprises an ID-tag at its bottom surface for storing information, like a RFID-tag. The ID tag can either be read-only or it can support read /write functionality, depending on the system it is used for.

The ID tag can support multiple functions like
- Allow for distinction between different passive transport carrier types types
- Enable matching of patient sample ID and passive transport carrier I, which provides easy and valid sample ID reading at all relevant positions inside the analyzer
- Allow for allocation of routing options and for allocation of handling or processing preferences or priorities to a passive transport carrier
- Support for system reboot after blind start-up / energy loss, which makes identification of passive transport carrier easier

Each carrier needs to be sensed for presence during handling and transport as it is only coupled to the handling system via magnetic force. It has to be ensured that this coupling is not lost along the way and that the carrier follows the routed path of the handling system. A Hall-sensor chip can be located in the handling system or the passive transport carrier for sensing coupling of handling system and sample carrier.

In case that a carrier is coupled, a significant portion of the magnetic field of the permanent magnet inside the handling system is routed through the U-shaped ferromagnetic core of the carrier. In an uncoupled state this magnetic field routes differently through ambient and air.

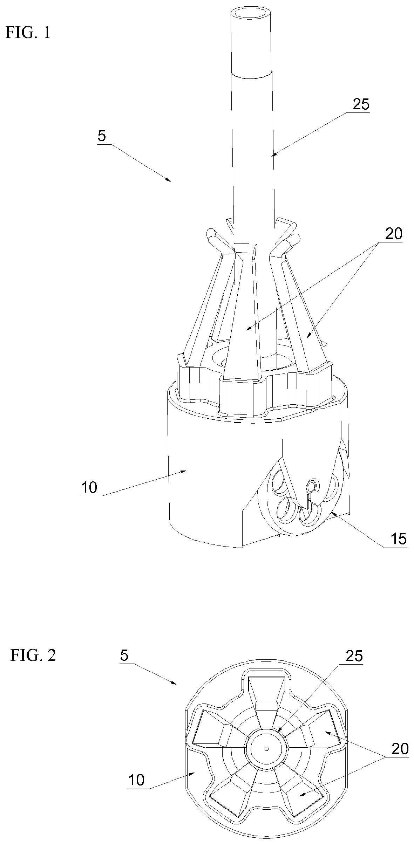

FIG. 1 shows a passive transport carrier 5 with a body 10 and a wheel (not shown). On top of the body 10 are clamping 20 arranged for fixation of a sample tube 25. The number of clamps 20 may depend from the diameter of sample tube 25.

FIG. 2 shows a top view onto a passive transport carrier 5 with five clamps 20 for fixation of a sample tube 25.

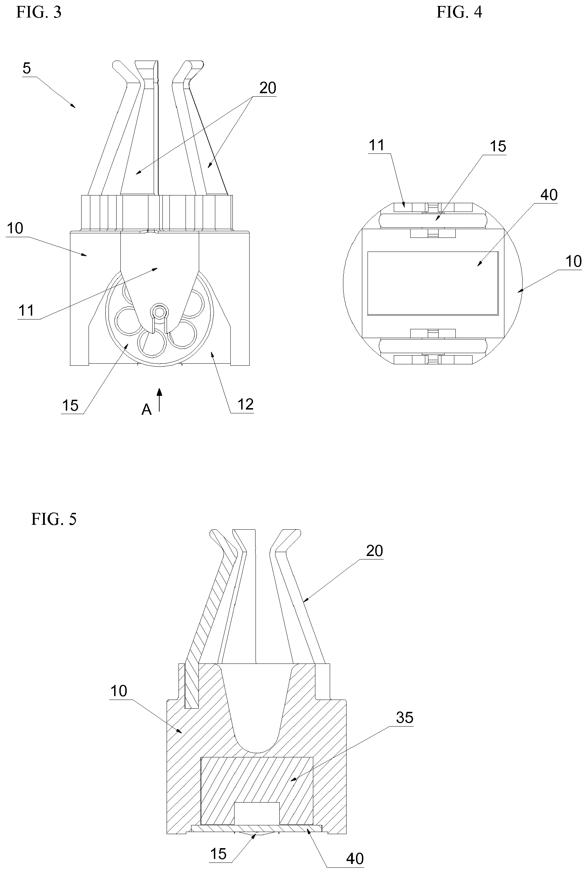

FIG. 3 shows a side view on a passive transport carrier 5. It can be taken from FIG. 3 that the diameter of wheel 15 is spanning through more than the half-height of body 10, The wheel 15 is arranged between body 10 and outer plate 11 in a recess 12 on opposing sides of the body 10 as can be taken from FIG. 4.

FIG. 4 further shows an ID tag for storing information regarding the content of the sample tube or the path that the passive transport carrier has to go for appropriate processing of the sample.

FIG. 5 shows a sectional view of a passive transport carrier 5 with body 10, hidden wheel 15, plate 11 and clamps 20. The ferromagnetic core 35 is U-shaped an arranged in an upright position with its opening directed to the bottom of body 10 of passive transport carrier 5. The U-shaped magnet core of the carrier is arranged above a base plate 40 of the carrier's body 10.

FIG. 6A and FIG. 6B show magnetic simulations to visualize differences between coupled (FIG. 6A) and uncoupled state (FIG. 6B) between passive transport carrier and handling system.

The U-shaped magnet of handling system 45 and a carrier 35 as well as the magnetic flux lines with coupled carrier 45 are shown in FIG. 6A. In FIG 6B are the magnetic flux lines without coupled carrier 46 shown. The sensor position 50 for determining whether a carrier is indicated in FIG. 6B, which can be between the flanks of U-shaped magnet 45.

The foregoing description of the preferred embodiment of the invention has been presented for purposes of illustration and description. It is not intended to be exhaustive or to limit the invention to the precise form disclosed, and modifications and variations are possible in light of the above teachings or may be acquired from practice of the invention. The embodiment was chosen and described in order to explain the principles of the invention and its practical application to enable one skilled in the art to utilize the invention in various embodiments as are suited to the particular use contemplated. It is intended that the scope of the invention be defined by the claims appended hereto, and their equivalents. The entirety of each of the aforementioned documents is incorporated by reference herein.

### Reference Numerals

- 5: passive transport carrier
- 10: body
- 11: outer plate
- 12: recess
- 15: wheel
- 20: clamp
- 25: sample tube
- 30: ID tag
- 35: U-shaped ferromagnetic core
- 40: base plate
- 45: magnetic flux lines with coupled carrier
- 46: magnetic flux lines without coupled carrier
- 50: sensor position

## Claims

1. A sample carrier for automated analyzer systems, comprising a body with two wheels at opposite sides of the body the carrier for moving the sample carrier, a U-shaped ferromagnetic core arranged in an upright position with its opening directed to the bottom of the sample carrier within the body of the carrier, wherein the sample carrier has no active drive.

2. The sample carrier of claim 1, comprising clamps on top of its body for fixation of sample tubes.

3. The sample carrier of claim 2, comprising two to five clamps for fixation of a sample

4. The sample carrier of any one of claims 2 or 3, wherein the clamps have a length for fixation of sample tubes with a diameter of 10 to 16 mm and a height of maximal 100 mm

5. The sample carrier of any one of claims 1 to 4, comprising ID tags at its bottom for storing information.

6. The sample carrier of any one of claims 1 to 5, wherein the two wheels are arranged centrally on a virtual axis through the sample carrier.

7. The sample carrier of any one of claims 1 to 6, wherein the diameter of the wheels is larger than at least half of the height of the sample carrier body.

8. A system comprising a sample carrier according to any one of claims 1 to 7, and a transporting surface onto which the passive transport carrier is moved, and a handling system for moving the sample carrier that is arranged below a transporting surface.

9. The system of claim 8, wherein the handling system comprises a U-shaped magnet that is arranged in downright position with its opening directed to the upper surface of the transporting surface.

10. The system of claim 9, wherein the U-shaped magnet is movable below the transporting surface.

11. The system of any one of claims 9 or 10, wherein the U-shaped magnet is movable in all three dimensions and is rotatable around any vertical axis going through the long basis of the U.

12. A method for transporting a sample comprising the steps of:
a. Placing a sample into a sample carrier comprising a body with two wheels at opposite sides of the body the carrier for moving the sample carrier, a U-shaped ferromagnetic core arranged in an upright position with its opening directed to the bottom of the sample carrier within the body of the carrier, wherein the sample carrier has no active drive;
b. Placing the sample carrier onto a transporting surface;
c. Coupling of the sample carrier with a handling system that is arranged below the transporting surface.

13. The method of claim 12, wherein the handling system comprises a U-shaped ferromagnetic core that is arranged in downright position with its opening directed to the upper surface of the transporting surface that is coupled with the U-shaped ferromagnetic core of the carrier.

14. The method of claim 12 or 13, wherein U-shaped ferromagnetic core of the handling system is moved below the transporting surface to move the coupled carrier rolling onto the transporting surface.

15. The use of a carrier according to any one of claims 1 to 7 or a system of any one of claims 8 to 11 to move a sample onto a transporting surface.
